Europäisches Patentamt

European Patent Office

Office européen des brevets

(11) Veröffentlichungsnummer : **0 058 398**
**B1**

(12) ## EUROPÄISCHE PATENTSCHRIFT

(45) Veröffentlichungstag der Patentschrift :
28.05.86

(21) Anmeldenummer : 82101019.6

(22) Anmeldetag : 11.02.82

(51) Int. Cl.⁴ : **B 29 B 13/06**, F 26 B   5/08,
F 26 B 17/10

(54) Vorrichtung zum Entwässern und Trocknen von Feststoffen, insbesondere von unterwassergranulierten Kunststoffen.

(30) Priorität : 16.02.81 DE 3105609

(43) Veröffentlichungstag der Anmeldung :
25.08.82 Patentblatt 82/34

(45) Bekanntmachung des Hinweises auf die Patenterteilung : 28.05.86 Patentblatt 86/22

(84) Benannte Vertragsstaaten :
AT BE CH DE FR GB IT LI NL

(56) Entgegenhaltungen :
AU-B-    19 020
DE-A- 1 920 786
DE-A- 2 231 722
DE-B- 2 126 069
US-A- 4 081 382
US-A- 4 102 056

(73) Patentinhaber : AUTOMATIK Apparate-Maschinenbau GmbH
Ostring 19
D-8754 Grossostheim 2 (DE)

(72) Erfinder : Hench, Hans, sen.
Sonnhalde 31
D-7851 Inzlingen (DE)
Erfinder : Lettner, Horst
Jahnstrasse 22
D-8752 Glattbach (DE)
Erfinder : Hunke, Fritz
Westring 38
D-8754 Grossostheim 2 (DE)

(74) Vertreter : Bardehle, Heinz, Dipl.-Ing.
Patent- und Rechtsanwälte Bardehle-Pagen-
berg-Dost-Altenburg & Partner Postfach 86 06 20
D-8000 München 86 (DE)

## Beschreibung

Die Erfindung bezieht sich auf eine Vorrichtung zum Entwässern und Trocknen von Feststoffen, insbesondere von unterwassergranulierten Kunststoffen in Form eines Granulat-Wasser-Gemisches auf einem Bogensieb mittels eines Luftstromes, der sowohl in Durchtrittsöffnung des Wassers durch das Bogensieb als auch entlang von diesem verläuft, wobei das Granulat-Wasser-Gemisch durch einen Zuführungskanal dem Bogensieb zugeleitet wird und mittels der Strömungsenergie der Luft über das Bogensieb gewirbelt und am Ende des Bogensiebs einem Auslaßkanal zugeführt wird, wobei ein Lufteinlaß am Anfang des Bogensiebs vorgesehen ist.

Eine derartige Vorrichtung ist in Fig. 2 der DE-OS-2 231 722 dargestellt. Bei dieser Vorrichtung wird das Granulat-Wasser-Gemisch über den Zuführungskanal praktisch tangential dem Bogensieb zugeleitet, wobei der am Anfang des Bogensiebs vorgesehene Lufteinlaß nur eine Luftzuführung ermöglicht, bei der von dem darunter zugeführten Granulat-Wasser-Gemisch die Luft mitgerissen wird, die also nicht in der Lage ist, dem Granulat-Wasser-Gemisch eine besondere Beschleunigung zu geben. Aufgrund der im wesentlichen tangentialen Zuführung des Granulat-Wasser-Gemischs zu dem Bogensieb wird das Granulat nur über die Oberfläche des Bogensiebs gewirbelt, so daß nur durch die dabei entstehenden Zentrifugalkräfte das dem Granulat anhaftende Wasser abgeschleudert werden kann.

Eine prinzipiell in gleicher Weise gestaltete Vorrichtung zeigt die US-PS-4 081 382, bei der der Lufteinlaß am Anfang des Bogensiebs mit wesentlich größerem Querschnitt als der Zuführungskanal für das Granulat-Wasser-Gemisch ausgebildet ist, so daß ein diesem Lufteinlaß zugeführter, von einem Ventilator erzeugter Luftstrom keinerlei scharfe Bündelung erhält und in Folge dessen seine auf das Granulat-Wasser-Gemisch bewirkte Beschleunigung begrenzt bleibt. Auch bei dieser Vorrichtung ergibt sich aufgrund der gegebenen räumlichen Verhältnisse eine Bewegung des Granulats, die im wesentlichen der Oberfläche des Bogensiebs folgt, wobei zwar durch am Bogensieb angebrachte wenige Vorsprünge eine Ablenkung des Granulats vom Bogensieb erfolgt, die jedoch den unerwünschten Nebeneffekt der Verringerung der Geschwindigkeit des Granulats hat, was der erwünschten Wirkung des Abschleuderns des Wassers vom Granulat abträglich ist.

Eine weitere Vorrichtung zum Entwässern eines Granulat-Wasser-Gemisches ist aus der DE-PS-2 126 069 bekannt, bei der das Granulat-Wasser-Gemisch über einen Zuführungskanal fast tangential einem Bogensieb zugeleitet wird, wobei im Anschluß an das Ende des Zuführungskanals eine einen wesentlichen Bereich des Bogensiebes überdeckende Luftzuführungszone folgt, die durch die Umfangsfläche eines Ventilators gebildet wird. Infolge der Drehung des Ventilators in Stromrichtung des Granulat-Wasser-Gemisches über das Bogensieb weist die Luftströmung längs dieser Zone sowohl eine Transportkomponente als auch im gesamten Bereich der Zone eine radiale Komponente auf, wodurch dem Granulat die Tendenz gegeben wird, weitgehend der Krümmung des Bogensiebs zu folgen. Die dabei auftretende Zentrifugalkraft bewirkt dann ein Abschleudern des Wassers und dessen Hindurchtritt durch das Bogensieb.

Der Erfindung liegt die Aufgabe zugrunde, unter Verringerung des technischen Aufwandes für die Erzeugung der Luftströmung die Wirksamkeit des Bogensiebs zu erhöhen. Erfindungsgemäß geschieht dies dadurch, daß der Lufteinlaß als Schlitzdüse ausgebildet ist, die für die Zuleitung des Luftstroms auf das Bogensieb quer zu diesem verläuft und derart gerichtet ist, daß das von dem Luftstrom mitgerissene Granulat-Wasser-Gemisch in einem etwa zwischen 25° und 75° liegenden Winkel zum Bogensieb auf diesem auftrifft, und in Strömungsrichtung hinter der Schlitzdüse ein das Bogensieb abdeckender, an die Rückwand der Schlitzdüse anschließender, sich bis zum Auslaßkanal gerade erstreckender ebener Deckel zur Führung des Granulats in zwischen Deckel und Bogensieb hin- und hergehender Prallbewegung angeordnet ist.

Durch den durch die Schlitzdüse scharf gebündelten Luftstrom wird das Granulat-Wasser-Gemisch erheblich beschleunigt und in Richtung des Luftstroms in einer von der Tangentialrichtung erheblich abweichenden Richtung auf das Bogensieb geschleudert, wobei das Wasser zum überwiegenden Teil wegen dieser Auftreffrichtung sofort durch das Bogensieb abfließt. Aufgrund des Auftreffwinkels des Granulats wird dieses vom Bogensieb zurückgeworfen, wodurch sich im Zusammenwirken mit dem das Bogensieb hinter der Schlitzdüse abdeckenden ebenen Deckel eine hin- und hergehende Prallbewegung ergibt, in deren Verlauf das dem Granulat noch anhaftende Wasser in erheblichem Umfang vom Granulat abgeschleudert wird. Es handelt sich also bei dieser Deckelausbildung um eine einfache konstruktive Ausbildung, die die hin- und hergehende Prallbewegung begünstigt und somit die Entfernung des Wassers erheblich fördert, so daß das Granulat das Ende des Bogensiebs weitgehend wasserfrei verläßt.

Das dem Granulat nach Verlassen des vorstehend erwähnten Bogensiebs noch anhaftende Wasser läßt sich durch ein anschließendes weiteres Bogensieb entfernen. Zweckmäßig wird dieses weitere Bogensieb mit einer weiteren Schlitzdüse für die Zuleitung eines Luftstromes versehen.

Wenn es aus räumlichen Gründen erforderlich ist, daß das trockene Granulat die Vorrichtung in einer gewissen Höhe, beispielsweise 1 m, verläßt, dann verbindet man zweckmäßig die beiden Bogensiebe durch einen schräg aufwärts gerichteten, pneumatischen Förderkanal.

Vorteilhaft lassen sich die mit einer Schlitzdüse versehenen Bogensiebe zu einem Mehrfachtrockner hintereinander schalten, wobei sich über die Düsen und die Bogensiebe eine Abdeckung erstreckt, die die jeweiligen Deckel bildet. Die konstruktive Gestaltung der Deckel wird hierdurch besonders vereinfacht.

In den Figuren sind Ausführungsbeispiele der Erfindung dargestellt. Es zeigen :

Figur 1 eine Prinzipdarstellung eines Bogensiebes mit Schlitzdüse und Deckel

Figur 2 eine Vorrichtung mit insgesamt drei Bogensieben und schräg aufwärts gerichtetem Förderkanal

Figur 3 eine Vorrichtung mit drei unmittelbar hintereinandergeschalteten Bogensieben und gemeinsamer, die einzelnen Deckel bildender Abdeckung

Figur 4 eine Vorrichtung mit drei Bogensieben in zickzackförmiger Anordnung, die in einem geschlossenen Gehäuse untergebracht sind.

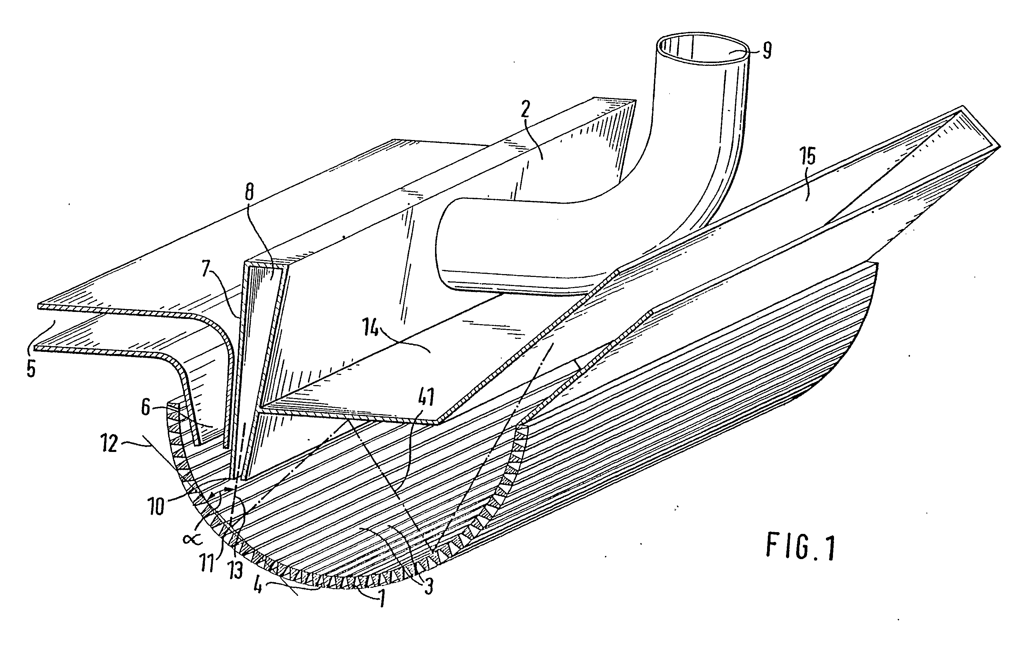

Die in der Figur 1 dargestellte Vorrichtung zeigt das Bogensieb 1, bestehend aus parallelen Querstäben 3, zwischen denen Zwischenräume 4 liegen, die für den Durchtritt des abzuführenden Wassers dienen. Ein derartiges Bogensieb ist beispielsweise aus der eingangs erwähnten DE-PS-2 126 069 bekannt. Die einzelnen Querstäbe 3 werden an ihren Stirnseiten in hier nicht interessierender Weise durch Gehäuseplatten gehalten, die gleichzeitig eine seitliche Wandung bilden. Dem Bogensieb 1 wird Granulat-Wasser-Gemisch über den Zuführungskanal 5 zugeführt, dessen Austrittsstelle 6 seitlich von der Vorderwand 7 der Schlitzdüse 8 begrenzt wird. Der Schlitzdüse 8 wird über den Schlauch 9 ein Luftstrom zugeführt, der am Mundstück 10 der Schlitzdüse 8 austritt und bei dem hier dargestellten Ausführungsbeispiel unter einem Winkel α von 30° auf das Bogensieb 1 auftrifft, wobei dieser Winkel α zwischen der mittleren Auftreffstelle 11 des Luftstroms 13 und der an das Bogensieb 1 angelegten Tangente 12 gemessen ist.

Das an der Austrittsstelle 6 austretende Granulat-Wasser-Gemisch wird von dem Luftstrom 13 beschleunigt und prallt gemäß der eingezeichneten Richtung des Luftstromes 13 auf das Bogensieb 1, wobei aufgrund des Auftreffwinkels von 30° der wesentliche Teil des Wassers durch das Bogensieb 1 abgeführt wird. Aufgrund des Auftreffwinkels ergibt sich außerdem ein Pralleffekt für das Granulat, das von den Stäben 3 des Bogensiebs 1 abprallt und gegen den Deckel 14 geworfen wird. Von diesem prallt es zurück auf das Bogensieb 1, so daß sich hinter der Auftreffstelle 11 entlang des Bogensiebs 1 eine hin- und hergehende Prallbewegung gemäß der eingezeichneten zickzackförmigen strichpunktierten Linie 41 ergibt, bis das Granulat schließlich das Ende des Bogensiebs 1 erreicht und in den Auslaßkanal 15 gelangt, in dem es infolge der ihm noch innewohnenden kinetischen Energie weitergefördert wird, bis es zu einer Weiterverarbeitungsstelle gelangt.

Die in der vorstehend erwähnten Weise erzeugte Prallbewegung sorgt dafür, daß nach dem ersten Auftreffen des Granulat-Wasser-Gemisches auf dem Bogensieb 1 im Bereich der Auftreffstelle 11 dem Granulat noch anhaftendes Wasser schrittweise abgeschleudert wird, das dann durch die Zwischenräume 4 zwischen den Querstäben 3 hindurchtritt. Auf diese Weise gelangt das Granulat fast wasserfrei in den Auslaßkanal 15. Der bei dieser Vorrichtung erzielte Effekt des Wegschleuderns des Wassers vom Granulat wird im wesentlichen durch die hin- und hergehende Prallbewegung erzielt, die im Gegensatz zu der sonst üblichen mehr oder minder jeweils tangentialen Gleitbewegung des Granulats über das Bogensieb vor sich geht. Es hat sich gezeigt, daß das Abschleudern des Wassers aufgrund der hin- und hergehenden Prallbewegung wesentlich intensiver ist als im Falle der mehr oder minder gleichmäßigen Führung des Granulats entlang der inneren Oberfläche eines Bogensiebes.

Der Deckel 14, der für die Prallbewegung mit verantwortlich ist, erstreckt sich von der Rückwand 2 der Schlitzdüse 7 bis zum Auslaßkanal 15 und sorgt somit dafür, daß kein vom Bogensieb 1 zurückprallendes Granulat nach außen hin wegspringen kann.

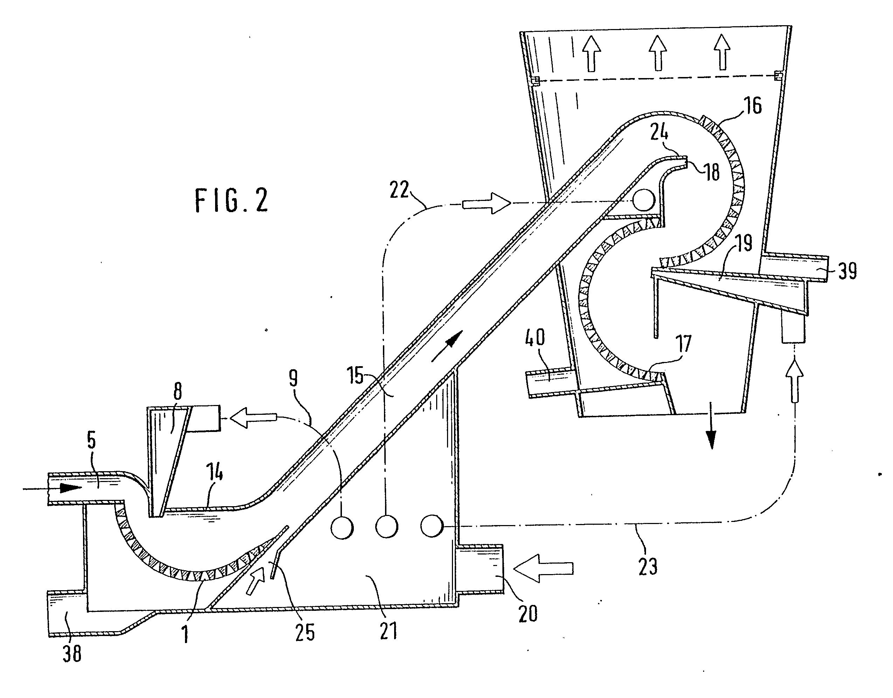

Bei der in Figur 2 dargestellten Vorrichtung sind drei Bogensiebe 1, 16 und 17 jeweils mit einer Schlitzdüse 8, 18 und 19 hintereinandergeschaltet, wobei zwischen die Bogensiebe 1 und 16 noch der schräg aufwärts gerichtete Förderkanal 15 eingeschaltet ist. Die Luftversorgung erfolgt bei dieser Vorrichtung über die Luftzuführung 20, die die Luft einem Verteilungsbehälter 21 zuführt, aus dem die Luftzuführungsschläuche 9, 22 und 23 abzweigen. Über diese Luftzuführungsschläuche 9, 22 und 23 werden die Schlitzdüsen 8, 18 und 19 mit Luft versorgt.

Die drei Bogensiebe 1, 16 und 17 wirken alle in der Weise, wie sie im Zusammenhang mit der Figur 1 beschrieben ist, so daß sich also in diesen drei Bogensieben die erwähnte Prallbewegung des Granulats ausbildet. Auf diese Weise erfolgt durch diese Vorrichtung eine besonders intensive Entfeuchtung von Granulat.

Es sei noch darauf hingewiesen, daß die Schlitzdüse 18 so angeordnet ist, daß ihre Vorderwand 24 in den Förderkanal 15 übergeht, so daß im Förderkanal 15 hinaufkriechendes Wasser über die Vorderwand 24 fließen muß und damit in den aus der Schlitzdüse 18 austretenden Luftstrom gelangt. Dieses Wasser kann auf diese Weise durch das Bogensieb 16 abgeführt werden.

Das mittels der Bogensiebe 1, 16 und 17 abgeschiedene Wasser tritt über die Wasserauslässe 38, 39 und 40 aus.

Die Luftzuführung zu dem pneumatischen Förderkanal 15 erfolgt am Ende des Bogensiebs 1 mittels der Lufteintrittsdüse 25, aus der Luft schräg nach oben gerichtet austritt und dem Förderkanal 15 zugeleitetes Granulat in der im Förderkanal 15 eingezeichneten Pfeilrichtung nach oben hin zu dem Bogensieb 16 transportiert.

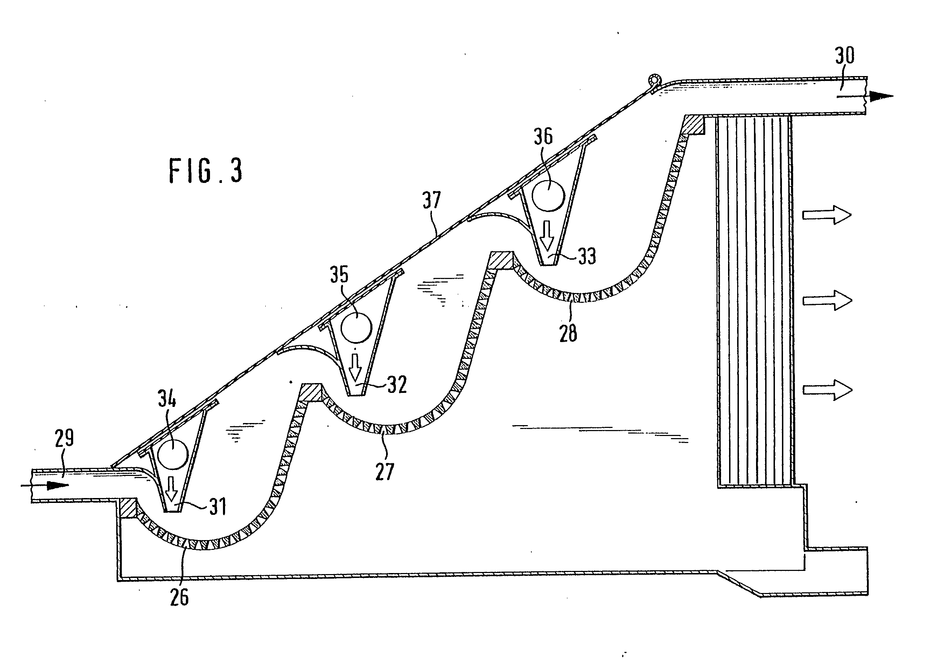

In der Figur 3 ist eine Vorrichtung dargestellt, bei der die drei Bogensiebe 26, 27 und 28 direkt hintereinandergeschaltet sind, und zwar mit einer schräg nach oben gerichteten Transportkomponente, so daß über den Zuführungskanal 29 zugeführtes Granulat-Wasser-Gemisch etwa um 1 m höher am Auslasstutzen 30 austritt. Die drei Bogensiebe 26, 27 und 28 sind je mit den Schlitzdüsen 31, 32 und 33 versehen, die gemäß der hier gewählten Darstellung einzeln über die Rohrstutzen 34, 35 und 36 mit Luft versorgt werden. Oberhalb der drei Schlitzdüsen 31, 32 und 33 ist die Abdeckung 37 vorgesehen, die sich über alle Bogensiebe 26, 27 und 28 erstreckt und dabei jeweils den betreffenden Deckel für das Bogensieb bildet. Im Bereich jedes Bogensiebes 26, 27 und 28 bildet sich dann unter der Wirkung der aus den Schlitzdüsen 31, 32 und 33 austretenden Luft die hin- und hergehende Prallbewegung des Granulats aus, so daß sich auch hier eine besonders intensive Entfeuchtung des Granulats ergibt.

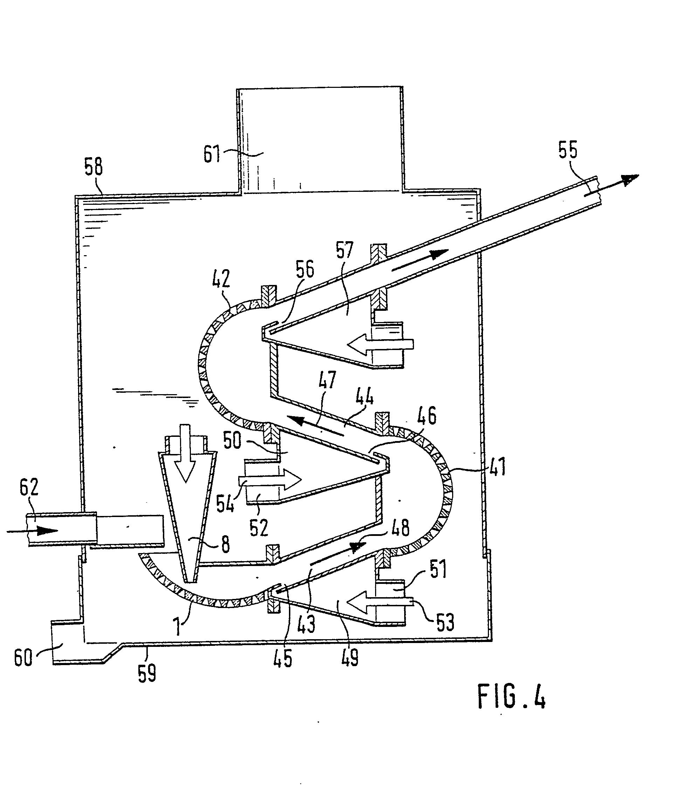

Bei der in Fig. 4 dargestellten Vorrichtung sind dem mit der Schlitzdüse 8 versehenen Bogensieb 1 zwei weitere Bogensiebe nachgeschaltet, nämlich die Bogensiebe 41 und 42. Dabei erfolgt die Verbindung vom Bogensieb 1 zum Bogensieb 41 über den Förderkanal 43 und die Verbindung vom Bogensieb 41 zum Bogensieb 42 über den Förderkanal 44. Am jeweiligen unteren Ende der beiden Förderkanäle 43 und 44 sind die sich quer über den jeweiligen Förderkanal erstreckenden Lufteintrittsdüsen 45 und 46 angeordnet, die einen im jeweiligen Förderkanal schräg aufwärts gerichteten Luftstrom, angedeutet durch die Pfeile 47 und 48, erzeugen. Durch diese Luftströme 47 und 48 wird das dem jeweiligen Förderkanal 43 und 44 zugeleitete Granulat aufwärts transportiert. Unterhalb jedes der beiden Förderkanäle 43 und 44 sind Luftverteilungskästen 49 und 50 vorgesehen, denen über die Lufteintrittsöffnungen 51 und 52 der jeweilige Luftstrom zugeführt wird, angedeutet durch die Pfeile 53 und 54. Wie ersichtlich, verläuft dabei die Richtung der Luftströme 53 und 54 so, daß diese senkrecht zur Querrichtung der Förderkanäle 43 und 44 verlaufen, so daß sich auch unter der Wirkung der Luftverteilerkästen 49 und 50 im wesentlichen eine symmetrisch auf die Lufteintrittsdüsen 45 und 46 zu gerichtete Luftströmung innerhalb der Luftverteilerkästen ergibt. Dies hat zur Folge, daß die Luft aus den Lufteintrittsdüsen 45 und 46 über deren Länge weitgehend mit gleicher Geschwindigkeit austritt, so daß über die gesamte Breite der Förderkanäle 43 und 44 das in ihnen transportierte Granulat eine gleichmäßige Beschleunigung erhält. Durch die Anordnung der Luftverteilerkästen 49 und 50 wird dafür gesorgt, daß die Luftströmung in diesem Bereich mit nur einer Umlenkung vor sich geht, nämlich unmittelbar vor den Lufteintrittsdüsen 45 und 46, wodurch die Strömungsverluste entsprechend gering bleiben.

Dem Bogensieb 42 ist ein weiterer schräg aufwärts gerichteter Förderkanal 55 nachgeschaltet, der in gleicher Weise wie die Förderkanäle 43 und 44 an seinem unteren Ende mit einer sich quer über ihn erstreckenden Lufteintrittsdüse 56 versehen ist, die ihren Luftstrom über den Luftverteilerkasten 57 erhält. Über den Förderkanal 55 wird das durch die Vorrichtung getriebene Granulat wegbefördert. Es kann beispielsweise direkt zu Ablagebehältern transportiert werden, es ist aber auch möglich, an den Förderkanal 55 eine Bogensiebanordnung anzuschalten, ähnlich wie sie in Fig. 2 dem Förderkanal 15 nachgeschaltet ist.

Die in der Fig. dargestellte Anordnung der Bogensiebe 1, 41 und 42 mit den Förderkanälen 43, 44 und 55 ist in einem Gehäuse 58 untergebracht, dessen Boden 59 als Sammelbehälter für durch die Vorrichtung abgeschiedenes Wasser dient. In dem Boden 59 ist der Wasserauslaß 60 vorgesehen. Weiterhin ist das Gehäuse 58 mit dem Luftauslaß 61 versehen, durch den die Luft austritt, die durch die Bogensiebe 1, 41 und 42 hindurchtritt. Das Gehäuse ist als Schallschutzhaube ausgebildet, wozu es an seiner inneren Wandung mit schalldämmendem bzw. schallschluckendem Material versehen ist. In das Gehäuse 58 führt der Granulateinlaß 62, der, ähnlich wie in Fig. 1 dargestellt, bis zum Beginn des Bogensiebes 1 reicht und von dem aus das Granulat auf das Bogensieb 1 herabfällt.

**Patentansprüche**

1. Vorrichtung zum Entwässern und Trocknen von Feststoffen, insbesondere von unterwassergranulierten Kunststoffen in Form eines Granulat-Wasser-Gemisches auf einem Bogensieb (1) mittels eines Luftstromes, der sowohl in Durchtrittsrichtung des Wassers durch das Bogensieb (1) als auch entlang von diesem verläuft, wobei das Granulat-Wasser-Gemisch durch einen Zuführungskanal (5) dem Bogensieb (1) zugeleitet wird und mittels der Strömungsenergie der Luft über das Bogensieb (1) gewirbelt und am Ende des Bogensiebs (1) einem Auslaßkanal (15) zugeführt wird, wobei ein Lufteinlaß (8) am Anfang des Bogensiebs (1) vorgesehen ist, dadurch gekennzeichnet, daß der Lufteinlaß als Schlitzdüse (8) ausgebildet ist, die für die Zuleitung des Luftstroms auf das Bogensieb (1) quer zu diesem verläuft und derart gerichtet ist, daß das von dem Luftstrom mitgerissene Granulat-Wasser-Gemisch in einem etwa zwischen 25° und 75° liegenden Winkel zum Bogensieb (1) auf diesem auftrifft, und in Strömungsrichtung hinter der Schlitzdüse (8) ein das Bogensieb (1) abdeckender, an die Rückwand (2) der Schlitzdüse (8) anschließender, sich bis zum Auslaßkanal (15) gerade erstreckender ebener Deckel (14) zur Führung des Granulats in zwischen Deckel (14) und Bogensieb (1) hin- und hergehender Prallbewegung (41) angeordnet ist.

2. Vorrichtung nach Anspruch 1, dadurch gekennzeichnet, daß dem mit der Schlitzdüse (8) versehenen Bogensieb (1) ein weiteres Bogensieb (16) nachgeschaltet ist. (Fig. 2).

3. Vorrichtung nach Anspruch 2, dadurch gekennzeichnet, daß das weitere Bogensieb (16) mit einer weiteren Schlitzdüse (18) versehen ist.

4. Vorrichtung nach Anspruch 2 oder 3, dadurch gekennzeichnet, daß beide Bogensiebe (1, 16) durch einen schräg aufwärts gerichteten Förderkanal (15) verbunden sind.

5. Vorrichtung nach Anspruch 1, dadurch gekennzeichnet, daß mehrere, je mit einer Schlitzdüse (31, 32, 33) versehene Bogensiebe (26, 27, 28) zu einem Mehrfachtrockner hintereinandergeschaltet sind, wobei sich über die Düsen (31, 32, 33) und die Bogensiebe (26, 27, 28) eine Abdeckung (37) erstreckt, die den jeweiligen Deckel bildet.

6. Vorrichtung nach Anspruch 4, dadurch gekennzeichnet, daß dem mit der Schlitzdüse 8 versehenen Bogensieb 1 mehrere Bogensiebe (41, 42) unter Verbindung durch schräg aufwärts gerichtete Förderkanäle (43, 44) in zickzackförmiger Anordnung nachgeschaltet sind.

7. Vorrichtung nach Anspruch 4 oder 6, dadurch gekennzeichnet, daß jeder Förderkanal (43, 44) an seinem unteren Ende mit einer sich quer über ihn erstreckenden Lufteintrittsdüse (45, 46) versehen ist, der der Luftstrom (53, 54) senkrecht zur Querrichtung zugeführt wird.

8. Vorrichtung nach Anspruch 6 oder 7, dadurch gekennzeichnet, daß das mit der Schlitzdüse (8) versehene Bogensieb (1) mit den nachgeschalteten Bogensieben (41, 42) und den Förderkanälen (43, 44) in einem Gehäuse (58) untergebracht sind, dessen Boden (59) als Sammelbecken für abgeschiedenes Wasser mit einem Wasserauslaß (60) dient, und das in seinem oberen Bereich mit einem Luftauslaß (61) versehen ist.

9. Vorrichtung nach Anspruch 8, dadurch gekennzeichnet, daß das Gehäuse (58) als Schallschutzhaube ausgebildet ist.

**Claims**

1. An apparatus for draining and drying solids, particularly underwater granulated plastics materials in the form of a mixture of granules and water, on an arcuate strainer (1) by means of a stream of air which flows both in the direction of passage of the water through the arcuate strainer (1) and along this, the mixture of granules and water being supplied to the arcuate strainer (1) through a supply conduit (5) and being swirled over the arcuate strainer (1) by means of the energy of flow of the air, and supplied to an outlet conduit (15) at the end of the arcuate strainer (1), an air inlet (8) being provided at the beginning of the arcuate strainer (1), characterised in that the air inlet is constructed in the form of a slot nozzle (8) which extends transversely to the arcuate strainer (1) in order to supply the stream of air to this and is directed in such a manner that the mixture of granules and water entrained by the stream of air impinges on the arcuate strainer (1) at an angle to this of between about 25° and 75°, and disposed behind the slot nozzle (8) in the direction of flow is a plane cover (14) which covers the arcuate strainer (1), is connected to the rear wall (2) of the slot nozzle (8) and extends straight as far as the outlet conduit (15) to guide the granules in rebound motion (41) to-and-fro between cover (14) and arcuate strainer (1).

2. An apparatus as claimed in Claim 1, characterised in that the arcuate strainer (1) provided with the slot nozzle (8) is followed by a further arcuate strainer (16). (Figure 2).

3. An apparatus as claimed in Claim 2, characterised in that the further arcuate strainer (16) is provided with a further slot nozzle (18).

4. An apparatus as claimed in Claim 2 or 3, characterised in that the two arcuate strainers (1, 16) are connected by a conveying conduit (15) directed obliquely upwards.

5. An apparatus as claimed in Claim 1, characterised in that a plurality of arcuate strainers (26, 27, 28), each provided with a slot nozzle (31, 32, 33), are connected in series to form a multiple drier, and a covering (37), which forms the cover in each case, extends over the nozzles (31, 32, 33) and the arcuate strainers (26, 27, 28).

6. An apparatus as claimed in Claim 4, characterised in that the arcuate strainer (1) provided with the slot nozzle (8) is followed by a plurality of arcuate strainers (41, 42) connected by conveying conduits (43, 44) directed obliquely upwards in zig-zag arrangement.

7. An apparatus as claimed in Claim 4 or 6, characterised in that each conveying conduit (43, 44) is provided, at its lower end, with an air inlet nozzle (45, 46) which extends transversely over it and to which the stream of air (53, 54) is supplied perpendicular to the transverse direction.

8. An apparatus as claimed in Claim 6 or 7, characterised in that the arcuate strainer (1) provided with the slot nozzle (8) is accommodated, with the following arcuate strainers (41, 42) and the conveying conduits (43, 44), in a housing (58), the bottom (59) of which serves as a collecting tank for water separated out, with a water outlet (60), and which is provided in its upper region with an air outlet (61).

9. An apparatus as claimed in Claim 8, characterised in that the housing (58) is constructed in the form of a sound-insulating hood.

**Revendications**

1. Dispositif destiné à déshydrater et à sécher des matières solides, notamment des matières plastiques granulées sous l'eau se présentant sous la forme d'un mélange granulés-eau, sur un tamis en arc (1) au moyen d'un courant d'air, orienté dans la direction de passage de l'eau à travers le tamis en arc (1), ainsi que le long de çelui-ci, le mélange granulés-eau étant acheminé vers le tamis en arc (1) par un canal d'alimentation (5) et soumis à un effet de tourbillon par suite de l'écoulement de l'air sur le tamis (1) avant d'être acheminé vers un canal d'évacuation (15) à l'extrémité du tamis en arc, tandis qu'une arrivée d'air (8) est prévue au début du tamis (1) en arc, caractérisé en ce que l'arrivée d'air est une buse à fente (8) qui, pour acheminer le courant d'air jusqu'au tamis en arc (1) est perpendiculaire à celui-ci et dirigée en sorte que le mélange granulés-eau entraîné par le courant d'air forme un angle d'incidence sur le tamis en arc (1) compris entre 25 et 75°, et en ce qu'un couvercle (14), plan, s'étendant en ligne droite jusqu'au canal d'évacuation (15), recouvrant le tamis en arc (1) et prolongeant la paroi arrière (2) de la buse à fente (8) est disposé dans la direction d'écoulement à l'arrière de ladite buse, afin de guider les granulés dans un mouvement de rebondissement dans les deux sens (41) sur le couvercle (14) et le tamis en arc (1).

2. Dispositif selon la revendication 1, caractérisé en ce qu'en aval du tamis en arc (1) pourvu de la buse à fente (8) est monté un autre tamis en arc (16).

3. Dispositif selon la revendication 2, caractérisé en ce que l'autre tamis en arc (16) est pourvu d'une autre buse à fente (18).

4. Dispositif selon l'une quelconque des revendications 2 ou 3, caractérisé en ce que les deux tamis en arc (1, 16) sont reliés par un canal de transport (15) oblique, dirigé vers le haut.

5. Dispositif selon la revendication 1, caractérisé en ce que plusieurs tamis en arc (26, 27, 28) pourvus chacun d'une buse à fente (31, 32, 33) sont montés en série pour constituer un séchoir multiple, un capot (37) s'étendant au-dessus des buses (31, 32, 33) et des tamis en arc (26, 27, 28) pour constituer le couvercle de chacun d'eux.

6. Dispositif selon la revendication 4, caractérisé en ce qu'en aval du tamis en arc muni de la buse à fente (8) sont montés plusieurs tamis en arc (41, 42), disposés en zig-zag, et reliés par des canaux de transport (43, 44) obliques, dirigés vers le haut.

7. Dispositif selon l'une quelconque des revendications 4 ou 6, caractérisé en ce que chaque canal de transport (43, 44) est pourvu à son extrémité inférieure d'une buse d'entrée d'air (45, 46) s'étendant en travers de celui-ci, vers laquelle est acheminé le courant d'air (53, 54) perpendiculairement à sa direction transversale.

8. Dispositif selon l'une quelconque des revendications 6 ou 7, caractérisé en ce que le tamis en arc (1) pourvu de la fente (8) et les tamis en arc (41, 42) montés en aval ainsi que les canaux de transport (43, 44) sont logés dans un coffret (58) dont le fond (59) sert de collecteur à l'eau d'extraction et comporte une évacuation d'eau (60) ainsi qu'une évacuation d'air (61) à sa partie supérieure.

9. Dispositif selon la revendication 8, caractérisé en ce que le coffret (58) est insonorisé.

FIG.1

0 058 398

FIG. 2

0 058 398

FIG. 3

FIG.4

4